# EUROPÄISCHE PATENTANMELDUNG

(11) **EP 4 745 535 A1**
(43) Veröffentlichungstag der Anmeldung: **20.05.2026**
(21) Anmeldenummer: 24213712.3
(22) Anmeldetag: 18.11.2024
(51) Int. Cl.: G01F 23/00, E01F 9/608, E01F 9/669, G01F 23/284, E01F 9/658, E01F 9/677, G01F 23/292

(54) **SYSTEM ZUR TEMPORÄREN WASSERSTANDÜBERWACHUNG**

(71) Anmelder: Beilharz GmbH, 72189 Vöhringen (DE)
(72) Erfinder: Beilharz, Stefan, 72189 Vöhringen (DE)
(74) Vertreter: Westphal, Mussgnug & Partner Patentanwälte mbB

(57) **Zusammenfassung**

Bereitgestellt wird ein System (100,100',200,300,400,400') zur temporären Wasserstandüberwachung, wobei das System (100,100', 200,300,400,400') zur temporären Wasserstandsüberwachung eine am Straßenrand angeordnete Basis (110,210,310,410,410'), einen direkt oder indirekt mit der Basis (110,210,310,410,410') verbundenen Tragpfosten (120,220,320,420) und einen Sensor (140,140',240,340,440,440') zur Messung eines Wasserstands aufweist, der direkt oder indirekt mit dem Tragpfosten (120,220,320,420) verbunden und in einem innerhalb des Tragpfostens (120,220,320,420) oder im Inneren eines am Tragpfosten (120,220,320,420) angeordneten Auslegers (130,130'230,330) vorhandenen Innenraums (134,422,422') angeordnet ist, wobei mindestens eine der Verbindungen zwischen Straßenrand und Basis (110,210,310,410,410'), Basis (110,210,310,410,410') und Tragpfosten (120,220,320,420) sowie Tragpfosten (120,220,320, 420) und Sensor (140,140',240,340,440,440') zur Messung eines Wasserstands reversibel lösbar ist.

## Beschreibung

Lokale Starkregenereignisse sind in den letzten Jahren in Deutschland und Europa gehäuft aufgetreten, und es wird prognostiziert, dass ihre Häufigkeit bedingt durch den Klimawandel in den kommenden Jahren weiter zunehmen wird.

Aufgrund dieser Ereignisse gibt es einen steigenden Bedarf für die Überwachung von Wasserständen. Einerseits können in Abhängigkeit von den lokalen geographischen Gegebenheiten Straßenabschnitte, beispielsweise in Senken oder in Ufernähe überflutet und dadurch unpassierbar werden. Gerade dann, wenn THW und Rettungskräfte im Einsatz sind, ist es aber wichtig, möglichst unmittelbar Kenntnis davon zu erhalten, wenn eine Straßenverbindung unterbrochen und somit nicht mehr als Anfahrtsweg zu einem Einsatzort nutzbar ist. Andererseits kann für eine präzise Vorhersage der Höhe und des Zeitpunkts der Ankunft einer sich in einem Fluss stromabwärts bewegenden Flutwelle überaus hilfreich sein, auch möglichst detaillierte Informationen zur Situation kleinerer Zuflüsse und an einer Vielzahl von Stellen längs des Verlaufs eines Flusses zu erhalten.

Bislang erfolgt eine solche Überwachung von Wasserständen nur an einigen wenigen Punkten, an denen Sensoren zur Messung eines Wasserstands in ein Bauwerk, wie z.B. eine Brücke oder eine Unterführung, fest integriert verbaut werden können. Die Stelle, an der die Messung erfolgt, ist dabei primär durch die Verfügbarkeit des Bauwerks festgelegt und nicht flexibel anpassbar. Eine eigentlich dringend erwünschte Erhöhung der Messstellendichte scheitert dabei einerseits daran, dass solche Bauwerke üblicherweise nur in geringer Anzahl verfügbar und teuer zu errichten sind; zudem würde ein permanentes Netz von Sensoren zur Messung eines Wasserstands in der gewünschten Dichte eine hohe Investition bedeuten und erhebliche Wartungskosten mit sich bringen.

Die Aufgabe der Erfindung besteht daher darin, ein System zur temporären Wasserstandüberwachung bereitzustellen, welches bedarfsgerecht für einen begrenzten Zeitraum an unterschiedlichen Orten errichtet und wieder abgebaut werden kann. Diese Aufgabe wird gelöst von einem System mit den Merkmalen des Patentanspruchs 1. Vorteilhafte Weiterbildungen der Erfindung sind Gegenstand der abhängigen Patentansprüche.

Das erfindungsgemäße System zur temporären Wasserstandüberwachung weist eine am Straßenrand angeordnete Basis, einen direkt oder indirekt mit der Basis verbundenen Tragpfosten und einen Sensor zur Messung eines Wasserstands auf, der integral oder direkt oder indirekt mit dem Tragpfosten verbunden und in einem innerhalb des Tragpfostens oder im Inneren eines am Tragpfosten angeordneten Auslegers vorhandenen Innenraum angeordnet ist, wobei mindestens eine der Verbindungen zwischen Straßenrand und Basis, Basis und Tragpfosten sowie Tragpfosten und Sensor zur Messung eines Wasserstands reversibel lösbar ist.

Reversibel lösbar bedeutet dabei, dass die Verbindung oder eine gleichartige Verbindung nach dem Lösen wiederhergestellt werden kann; ausgeschlossen sind damit solche Verbindungen, die nur durch Zerstörung gelöst werden können. Durch die Existenz mindestens einer reversibel lösbaren Verbindung ist gewährleistet, dass das erfindungsgemäße System für eine temporäre Wasserstandüberwachung bedarfsgerecht gebildet und nach dem Ende des Bedarfs wieder rückgebaut werden kann, um dann an einem anderen Ort im erneuten Bedarfsfall wieder zusammengesetzt zu werden. Da die Straßeninfrastruktur allerdings in vielen Fällen für einen modularen Aufbau konzipiert ist, um den Austausch beschädigter Einzelteile zu erleichtern, besteht aber regelmäßig eine Vielzahl von Stellen, an denen die lösbare Verbindung vorliegen kann. Beispielsweise können Leitpfosten (die dann den Tragpfosten bilden) oft von ihrer fest am Straßenrand verankerten Basis reversibel gelöst und durch einen anderen Leitpfosten ersetzt werden, der dann an der Basis befestigt wird. Dementsprechend könnte beispielsweise zur Herstellung des erfindungsgemäßen Systems ein "normaler" Leitpfosten von seiner Basis entfernt und durch einen Leitpfosten mit einem in dessen Innenraum fest aufgenommenen Sensor zur Messung eines Wasserstands ersetzt werden; es könnte aber in einem zweiten Beispiel auch ein Aufsatz mit einem in seinem Innenraum fest aufgenommenen Sensor zur Messung eines Wasserstands auf einen vorhandenen Leitpfosten aufgesetzt werden.

Eine indirekte Verbindung ist vorhanden, wenn eine Komponente des Systems über mindestens eine weitere Komponente mit einer anderen Komponente des Systems verbunden ist. Beispielsweise ist ein im Innenraum eines am Tragpfosten angeordneten Auslegers angeordneter Sensor zur Messung eines Wasserstands über den Ausleger mit dem Tragpfosten verbunden.

Anzumerken ist, dass als Basis eine Komponente des Systems verstanden werden soll, die dem Tragpfosten seine Standfestigkeit verleiht. Dementsprechend hat auch ein Tragpfosten, der mit seinem unteren Endabschnitt in den Erdboden eingegraben ist, ohne dass dieser Endabschnitt durch ein Fundament oder eine andere Halterung fixiert ist als durch das umgebende Erdreich eine Basis, nämlich den eingegrabenen Endabschnitt, was zugleich das Beispiel für eine integral mit dem Tragpfosten verbundene Basis ist.

Die diesem System zu Grunde liegende Grundidee besteht darin, Elemente der bestehenden Straßeninfrastruktur zu nutzen, um Sensoren zur Messung eines Wasserstands temporär einzusetzen, also bei Bedarf -also sobald sich eine Starkregensituation in einem bestimmten Gebiet abzeichnet oder wenn eine Flutwelle als Folge von zuvor in einem anderen Gebiet niedergegangenen Starkregenereignissen zu erwarten ist- einfach auszubringen und wenn die Situation wieder vorüber ist wieder einfach zu deinstallieren.

Gerade wegen der erwünschten einfachen Installation und Deinstallation insbesondere des Sensors zur Messung eines Wasserstands und der Einbeziehung der zu großen Teilen auch außerhalb belebter Gegenden liegenden Straßeninfrastruktur, besteht eine erhöhte Diebstahlgefahr für den Sensor zur Messung eines Wasserstands, der erfindungsgemäß dadurch entgegengewirkt wird, dass er in einem Innenraum einer Systemkomponente angeordnet ist. Dementsprechend ist von außen für Verkehrsteilnehmer nicht ohne weiteres zu erkennen, dass ein solcher Sensor vorhanden ist.

Insbesondere kann es sich, wie weiter unten noch näher erläutert wird, bei den genutzten Elementen der bestehenden Straßeninfrastruktur um Leitpfosten und/oder deren Verankerung oder Fahrzeugrückhaltesysteme wie beispielsweise Leitplanken handeln, aber auch andere Elemente der bestehenden Straßeninfrastruktur sind denkbar.

Der Rückgriff auf solche Elemente der bestehenden Straßeninfrastruktur als Bestandteil des erfindungsgemäßen Systems hat eine Reihe von Vorteilen: Im Hinblick auf mögliche Beeinträchtigungen der Nutzung von Straßen ermöglicht dies eine unmittelbare Messung am fraglichen Ort; zugleich sind Straßen und Straßenränder im Regelfall im staatlichen oder öffentlichen Besitz, so dass rechtliche Probleme bei der Aufstellung weitgehend entfallen. Darüber hinaus erfolgt ein wesentlicher Teil der lokalen Be- und Entwässerung über Gräben, die oft parallel zu Straßen verlaufen, und es gibt eine Vielzahl von Flussabschnitten, die von einer Straße begleitet werden, da in durch die Führung von Straßen in Flusstälern die beim Straßenbau zu überwindenden geographischen Hindernisse oft minimiert werden, so dass durch an Straßenrändern positionierte Sensoren zur Messung eines Wasserstands auch wertvolle zusätzliche Informationen im Hinblick auf eine verbesserte Vorhersage des zeitlich Verlaufs von Flutwellen und deren Scheitelhöhen ermögliche werden.

Geeignete Sensoren zur Messung eines Wasserstands sind kommerziell erhältlich. Beispielsweise sind die Typen Vegapuls Air 41 der VEGA Grieshaber KG oder OTT RLS der Ott HydroMet GmbH für diesen Zweck einsetzbar. Zweckmäßigerweise verwendet man Sensoren, die ein Kommunikationsmodul aufweisen oder mit einem Kommunikationsmodul gekoppelt sind, so dass die von ihnen ermittelten Messwerte drahtlos an eine Zentrale oder eine Datencloud übermitteln, von wo sie durch Berechtigte abgerufen und ausgewertet werden können.

Gemäß einer besonders bevorzugten Weiterbildung der Erfindung ist der Sensor zur Messung eines Wasserstands in einem Adaptergehäuse angeordnet, dessen Außenkontur an die Form des Innenraums so angepasst ist, dass der Sensor zur Messung eines Wasserstands in einer definierten Position gehalten wird. Typischerweise handelt es sich dabei um ein zusätzliches Gehäuse, das das Außengehäuse des Sensors zur Messung eines Wasserstands zumindest abschnittsweise umgibt. Durch diese Maßnahme wird gewährleistet, dass der Sensor zur Messung eines Wasserstands reproduzierbar positioniert wird und danach sicher in der gewünschten Position bleibt. Anzumerken ist, dass dieses Adaptergehäuse eine Öffnung haben kann, um den Sensor zur Messung eines Wasserstands einfach in das Adaptergehäuse einsetzen zu können und dass es den Sensor nicht vollständig aufnehmen muss, sondern ein Teil des Sensors, beispielsweise ein Sender, ein Empfänger oder eine Optik, aus ihm herausragen kann.

Das Adaptergehäuse schützt den Sensor zur Messung eines Wasserstands zusätzlich von oben vor Wasser und anderen Umwelteinflüssen zusätzlich. Vorzugsweise hat es unten Öffnungen, damit z.B. Schwitzwasser oder doch eingetretenes Wasser wieder austreten kann. Das bevorzugte Material ist insbesondere aus Gründen der Gewichtsoptimierung Kunststoff; es kann aber auch anderes Material wie z.B. Stahl für das Adaptergehäuse verwendet werden.

Vorzugsweise ist das Adaptergehäuse an der Seite, die, wenn es im System installiert ist, nach unten zeigt, mit einer Öffnung zum Einsetzen des Sensors zur Messung eines Wasserstands versehen, die beispielsweise eine U-förmige Form aufweisen kann.

Darüber hinaus ist es bevorzugt, dass der Sensor zur Messung eines Wasserstands mit mindestens einem Sicherungsmittel im Adaptergehäuse gesichert und/oder fixiert wird. Beispielsweise kann dies mit Muttern erfolgen.

Noch weiter weisen bevorzugte Adaptergehäuse an ihrer Oberseite ein Hilfsmittel zum Herausziehen des Adaptergehäuses mit dem darin installierten Sensor zur Messung eines Wasserstands auf, das beispielsweise als ein Griff oder eine Öse zum Einhängen eines Hakens ausgeführt sein kann. Solche Hilfsmittel können die Deinstallation des Sensors zur Messung eines Wasserstands erheblich vereinfachen, weil sie das Herausziehen des Adaptergehäuses vereinfachen.

Allerdings kann es durch Wechselwirkung mit Verkehrsteilnehmern oder durch Umwelteinflüsse dazu kommen, dass die den Tragpfosten bildende Komponente ihre Form oder Ausrichtung ändert, z.B. weil sie nicht mehr senkrecht zum Erdboden steht, sondern unter einem Winkel. Um in einer solchen Situation eine korrekte Wasserstandmessung durch den Sensor zu gewährleisten, ist es bevorzugt, dass der Sensor zur Messung eines Wasserstands in einer kardanischen Aufhängung gelagert ist. Darunter fällt insbesondere neben der Variante, dass der Sensor mit dem Sensorgehäuse in dieser Aufhängung gelagert ist auch die Variante, dass eine Umhausung, in die der Sensor aufgenommen ist, in einer kardanischen Aufhängung gelagert ist. Eine einfache und kostengünstige Alternative zu dieser Vorgehensweise besteht darin, den Sensor zur Bestimmung eines Wasserstands frei hängend an einem Seil oder dergleichen anzuordnen, so dass er automatisch in der Vertikalen ausgerichtet ist.

Insbesondere dann, wenn der Sensor in einer Aufhängung gelagert ist, kann es auch sinnvoll sein, wenn das Adaptergehäuse keinen vollständigen oder gar keinen Boden hat.

Eine weitere bevorzugte Ausführungsform des Adaptergehäuses ermöglicht dies dadurch, dass oben am Adaptergehäuse eine Bohrung, ein Ring oder Ähnliches vorgesehen ist, durch die ein Seil zur Aufhängung des Sensors zur Bestimmung eines Wasserstands geführt und dann verknotet werden kann.

Um das weiter oben bereits angesprochene Diebstahlrisiko weiter zu minimieren, kann der Sensor zur Messung eines Wasserstands mit einem Mittel zur Diebstahlsicherung gesichert werden. Dies kann beispielsweise durch eine geeignet platzierte Schraube oder Kette geschehen; eine andere Möglichkeit besteht darin, den Sensor über GPS lokalisierbar zu machen.

Einige Möglichkeiten, die Basis zu realisieren, bestehen darin, dass die Basis durch die bodenseitige Verankerung für einen Leitpfostens, durch die bodenseitige Verankerung eines Verkehrszeichens, durch ein permanentes Fahrzeugrückhaltesystem, insbesondere eine Leitplanke, oder durch ein temporäres Fahrzeugrückhaltesystem, wie zum Beispiel eine Betongleitwand gebildet wird. Auf einer solchen Basis kann dann reversibel lösbar oder fest ein Tragpfosten befestigt sein, der beispielsweise durch einen Leitpfosten oder Leitpfostenabschnitt oder im Fall des Verkehrszeichens durch den Pfosten des Verkehrszeichens gebildet werden kann.

Bei einer Aufbauvariante des Systems kann es vorteilhaft sein, wenn die Basis und/oder der Tragpfosten zumindest abschnittsweise wasserdurchlässig sind und der Innenraum, in dessen Inneren der Sensor zur Messung eines Wasserstands angeordnet ist, befindet sich innerhalb des Tragpfostens. Dies führt dazu, dass unmittelbar im Inneren des Tragpfostens bzw. der Basis der Wasserstand gemessen werden kann. Beispielsweise kann ein Leitpfosten bis in die Erde reichen und so eine Messung des Anstiegs des Grundwasserlevels vorgenommen werden. Das Eindringen des Wassers kann durch das Anordnen von Löchern im Tragpfosten und/oder in der Basis erleichtert werden. Diese können auch in Bodennähe vorgesehen werden, wenn das System eine Fahrbahnüberflutung nachweisen soll, da dann das auf der Fahrbahn stehende Wasser in den vom Sensor zur Messung eines Wasserstandes überwachten Innenraum des Tragpfostens fließen kann.

Der Sensor zur Messung eines Wasserstands kann direkt im Innenraum des Tragpfostens, beispielsweise eines Leitpfostens installiert werden. Er kann dort über einen Adapter oder in einem Adaptergehäuse angeordnet werden, das beispielsweise - insbesondere von außen- fest mit einer Tragpfostenwand verschraubt ist, wobei vorzugsweise die Außenkontur des Adapters oder Adaptergehäuses an die Kontur des Tragpfosten gepasst ist. Er kann aber auch in diesem Innenraum aufgehängt werden. Das System ist dann absolut unsichtbar für den Verkehrsteilnehmer.

Zusätzliche Freiheitsgrade bei der Positionierung des Sensors zur Messung eines Wasserstands kann man dadurch gewinnen, dass dass der Innenraum, in dessen Inneren der Sensor zur Messung eines Wasserstands angeordnet ist, im Inneren des am Tragpfosten angeordneten Auslegers in dessen vom Tragpfosten weg weisenden Endabschnitt liegt. Hilfreich ist dies beispielsweise, wenn der Wasserstand eines neben der Straße verlaufenden Gewässers, z.B. eines Wasser führenden Straßengrabens, überwacht werden soll. Grundsätzlich ist aber auch denkbar, durch die Formgebung des Tragpfostens (z.B. dessen gekrümmten Verlauf) ohne dass ein Ausleger notwendig ist einen ähnlichen Effekt zu erzielen.

Besonders einfach installierbar ist ein solcher Ausleger, wenn der Ausleger auf den Tragpfosten aufsteckbar ist, wobei über die Aufnahme, mit der der Ausleger auf den Tragpfosten aufgesteckt ist, ein Formschluss mit dem Tragpfosten hergestellt wird, so dass der Ausleger verdrehsicher am Tragpfosten aufgesteckt ist. Bei Leitpfosten kann die Aufnahme beispielsweise polygonförmig sein. Details dazu, wie ein derartiger Formschluss prinzipiell realisierbar ist, sind beispielsweise aus der EP 3 696 322 A1 oder der DE 10 2014 101 574 A1 bekannt.

Bei einem System, bei dem der Sensor zur Messung eines Wasserstands im Inneren eines Auslegers angeordnet ist, kann die Diebstahlsicherung dadurch kompromittiert werden, dass passierende Verkehrsteilnehmer sich die Frage stellen, warum dieser Ausleger überhaupt vorhanden ist. Um hier durch das Legen einer falschen Fährte den Sensor zu sichern, kann der Ausleger ein Adapterstück zur Verbindung mit einem Verkehrsschild aufweisen. Details dazu, wie derartige Verbindungen ausgeführt werden können, sind beispielsweise der EP 3 695 322 A1 zu entnehmen.

Zugleich bildet ein solches Adapterstück ein Volumen, das hinsichtlich seiner Geometrie besonders gut geeignet ist um den Innenraum, in dessen Inneren der Sensor zur Messung eines Wasserstands angeordnet ist, in seinem Inneren zu realisieren.

Besonders bevorzugt ist es, wenn der Tragpfosten ein Leitpfosten ist. Leitpfosten stehen außerorts im Abstand von jeweils maximal 50m voneinander an allen Straßen, so dass eine Vielzahl von Messstellen vorbereitet sind. Sie können nicht nur an einer im Boden verankerten Basis angebracht sein, sondern werden auch häufig an Leitplanken und Betongleitwänden angebracht. Zudem erlauben die Vorschriften, Leitpfosten so nahe an der Straße aufzustellen wie fast kein anderes Zeichen, so dass Messungen direkt an der Fahrbahn möglich sind.

Insbesondere in Anbetracht der Tatsache, dass die Sensoren zur Messung eines Wasserstands nur eine beschränkte Zeit an einem gegebenen Einsatzort verwendet werden sollen ist normalerweise eine Stromversorgung durch eine integrierte Batterie oder einen integrierten Akku für den Sensor zur Messung eines Wasserstands ausreichend.

In Fällen, in denen eine längere Betriebsdauer erreicht werden muss, kann eine zusätzliche separate Stromversorgung für den Sensor zur Messung eines Wasserstands vorhanden sein, die beispielsweise im Inneren der Basis angeordnet werden kann. Eine solche zusätzliche separate Stromversorgung ist auch dann hilfreich, wenn das System zusätzlich eine Kamera aufweist, um Livebilder von der aktuellen Lage an der jeweiligen Messstelle zur Verfügung zu stellen.

Die Batterie kann aus Sicherheitsgründen unterhalb des Straßenniveaus angeordnet werden, sollte dann aber wasserdicht ausgeführt sein.

Die Erfindung wird nachfolgend anhand von Figuren, die Ausführungsbeispiele darstellen, näher erläutert. Es zeigt:
- Fig. 1:: Ein erstes System zur temporären Wasserstandüberwachung;
- Fig. 2:: den Ausleger des Systems aus Figur 1 mit geöffnet dargestelltem Innenraum
- Fig. 3:: einen in einem Adaptergehäuse angeordneten Sensor zur Messung eines Wasserstands;
- Fig. 4:: einen in einem Adaptergehäuse kardanisch gelagerten Sensor zur Messung eines Wasserstands;
- Fig. 5:: das System aus Figur 1 mit einem am Adapterstück des Auslegers angeordneten Verkehrsschild;
- Fig. 6:: ein zweites System zur temporären Wasserstandüberwachung;
- Fig. 7:: ein drittes System zur temporären Wasserstandüberwachung;
- Fig. 8:: ein viertes System zur temporären Wasserstandüberwachung;
- Fig. 9a:: eine isometrischen Darstellung eines leeren Adaptergehäuses;
- Fig. 9b:: eine isometrische Darstellung des Adaptergehäuses aus Fig. 9a mit darin angeordnetem Sensor;
- Fig. 9c:: eine geöffnete Darstellung des Adaptergehäuses mit darin angeordnetem Sensor aus Figur 9b;
- Fig. 10:: eine Variante des vierten Systems zur temporären Wasserstandsüberwachung aus Figur 8;
- Fig. 11:: eine Variante des ersten Systems zur temporären Wasserstandsüberwachung aus Figur 1;

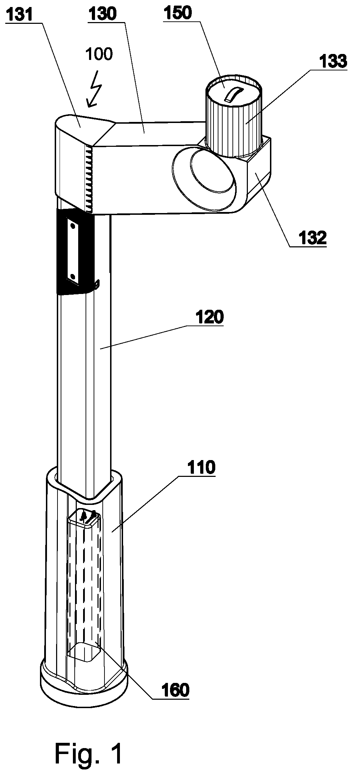

Figur 1 zeigt ein erstes System 100 zur temporären Wasserstandüberwachung mit einer Basis 110, einem Tragpfosten 120, der hier durch einen Leitpfosten gebildet wird und einem Ausleger 130. Die Basis 110, die typischerweise unter der Straße liegt, hat in diesem Beispiel in ihrem Inneren eine Stromversorgung 160 für einen Sensor zur Messung eines Wasserstands. Mindestens eine der Verbindungen zwischen Basis 110 und Tragpfosten 120 bzw. Tragpfosten 120 und Ausleger 130 ist reversibei lösbar gestaltet; bevorzugt ist das für die zuletzt genannten Verbindung der Fall.

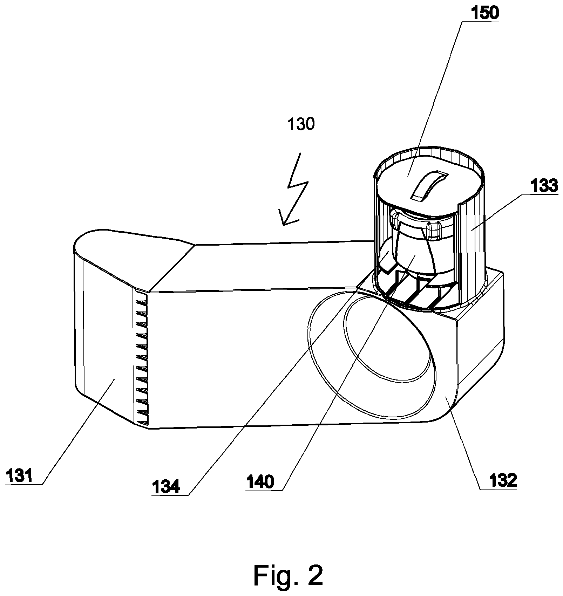

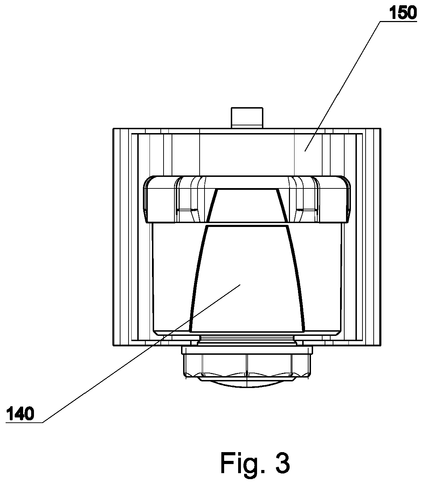

Wie man besonders gut in der Darstellung der Figur 2 erkennt, hat der Ausleger 130 eine Aufnahme 131, in die der Tragpfosten 120 eingeschoben werden kann, um die reversibel lösbare Verbindung herzustellen. Die Aufnahme 131 ist so geformt, dass durch einen Formschluss ein Verdrehen des Auslegers 130 relativ zum Tragpfosten 120 gesperrt wird. Am der Aufnahme 131 gegenüberliegenden distalen Endabschnitt 132 ist ein Adapterstück 133 vorhanden, dessen hohles Inneres einen Innenraum 134 bildet. Im Innenraum 134 ist ein Detektor 140 zur Messung eines Wasserstands angeordnet, der wie in Figur 3 noch besser zu erkennen ist, in ein Adaptergehäuse 150 aufgenommen ist, dessen Außenkontur an die Form des Innenraums 134 so angepasst ist, dass der Sensor 140 zur Messung eines Wasserstands durch einen Formschluss in einer definierten Position gehalten wird. Der Sensor 140 zur Messung eines Wasserstands ist somit indirekt über das Adaptergehäuse 150 und den Ausleger 130 mit dem Tragpfosten 120 verbunden.

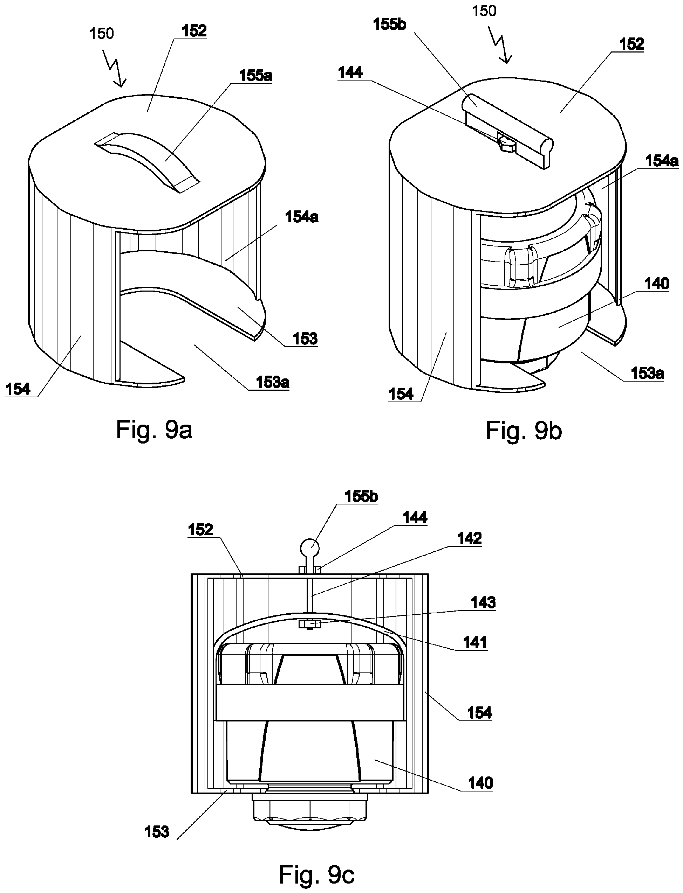

Weitere vorteilhafte optionale Eigenschaften des Adaptergehäuses 150, lassen sich in den Figuren 9a bis 9c erkennen. Das Adaptergehäuse 150 hat einen Deckel 152, einen Boden 153 und eine Wandfläche 154. In den dargestellten Aussführungsbeispieen des Adaptergehäuses 150 weisen der Boden 153 eine U-förmige Ausnehmung 153a und die Wandfläche 154 eine Öffnung 154a auf, wobei die U-förmige Ausnehmung 153a und die Öffnung 154 ineinander übergehen, so dass der Detektor 140 zur Messung eines Wasserstands von der Seite her eingeführt werden kann. Grundsätzlich kann der Detektor 140 zur Messung eines Wasserstands bei geeigneter Geometrie auf dem Boden 153 abgestützt sein; in der in den Figuren 9b und 9c dargestellten Ausführungsform weist er jedoch eine Halterung 141 auf, an der ein Seil 142 befestigt ist. Das Seil 142 ist durch eine Öffnung im Deckel 152 hindurchgeführt und mit Befestigungsmitteln 143,144 am der Halterung 141 bzw. an der Oberseite des Deckels 152 fixiert, so dass der Sensor 140 zur Messung eines Wasserstands frei schwingend aufgehängt ist.

Am Deckel des Adaptergehäuses 150 ist bei den in den Figuren 9a bis 9c gezeigten Beispielen jeweils ein Griff 155a, 155b angeordnet, der im Fall des Griffs 155a einen vom Deckel 152 beabstandeten Abschnitt aufweist, so dass ein Haken oder ein Abschnitt eines Seils eingeführt werden kann, um das Adaptergehäuse 150 mit dem darin angeordneten Sensor zur Messung eines Wasserstands einfach aus einem Innenraum eines Tragpfostens oder Auslegers herausgezogen werden kann.

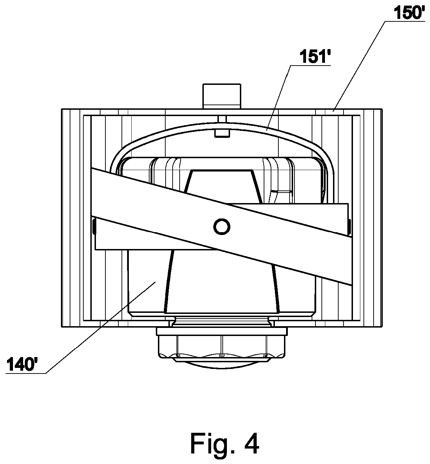

Figur 4 zeigt eine Variante eines Sensors 140' zur Messung eines Wasserstands mit Adaptergehäuse 150', die in gleicher Weise wie die in Figur 2 für den Sensor 140 zur Messung eines Wasserstands mit Adaptergehäuse 150 in den Innenraum 134 aufgenommen werden kann. Der Unterschied zum Sensor 140 besteht darin, dass der Sensor 140' in einer kardanischen Lagerung 151 gelagert ist, so dass er auch dann senkrecht ausgerichtet bleibt, wenn der Tragpfosten 120 schief steht, etwa als Konsequenz einer Kollision mit einem Fahrzeug.

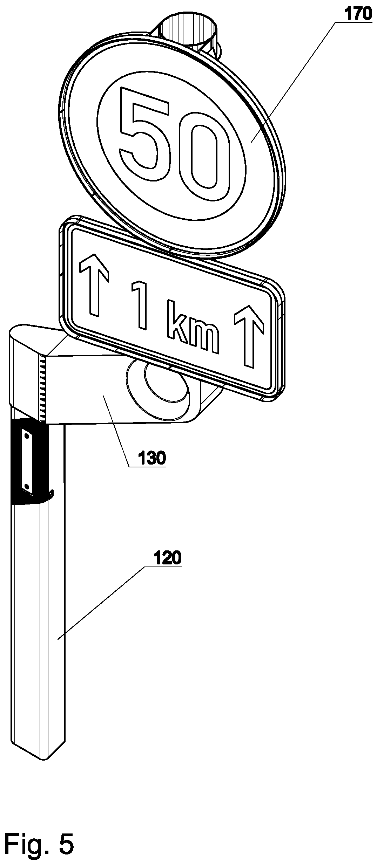

Um trotz des Vorhandenseins eines solchen Auslegers 130 nicht unmittelbar den Schluss nahe zu legen, dass hier ein Sensor 140 zur Messung eines Wasserstands an der Straße herumsteht und relativ einfach und risikofrei entwendet werden kann, wird auf das Adapterstück 133 des Auslegers 130 zweckmäßigerweise ein Verkehrsschild 170 aufgeschoben, wie dies in Figur 5 exemplarisch gezeigt ist.

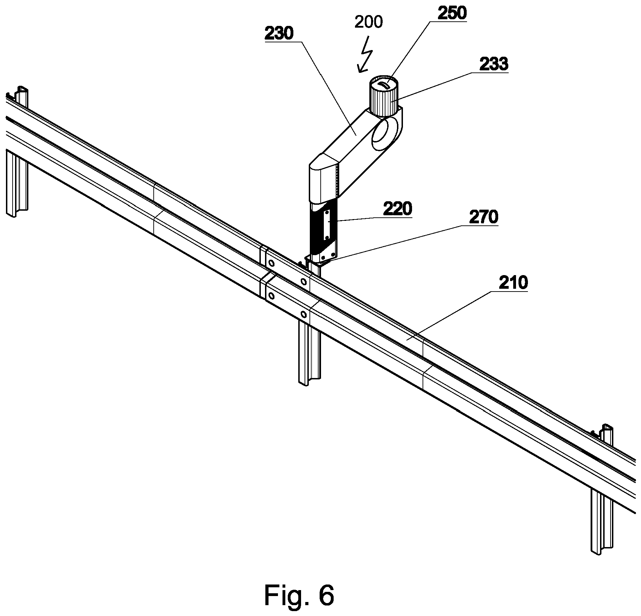

Figur 6 zeigt ein zweites System 200 zur temporären Wasserstandüberwachung mit einer Basis 210, die hier durch eine Leitplanke bzw. Schutzplanke gebildet wird, Tragpfosten 220, der durch einen Leitpfostenabschnitt gebildet wird und Ausleger 230 mit Adapterstück 233, in dessen Innenraum wie beim ersten System ein in ein Adaptergehäuse 250 aufgenommener, in Figur 6 nicht sichtbarer Sensor zur Messung eines Wasserstands angeordnet ist. Anzumerken ist an dieser Stelle, dass auch ein einzelner Schutzplankenpfosten 260 als Basis dienen kann.

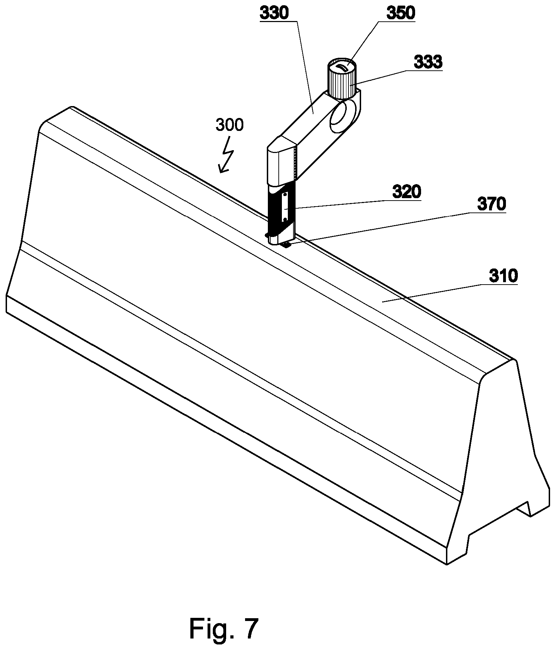

Figur 7 zeigt ein drittes System 300 zur temporären Wasserstandüberwachung mit einer Basis 310, die hier durch eine Betongleitwand gebildet wird, Tragpfosten 320, der durch einen Leitpfostenabschnitt gebildet wird und Ausleger 330 mit Adapterstück 333, in dessen Innenraum wie beim ersten System ein in ein Adaptergehäuse 350 aufgenommener, in Figur 7 nicht sichtbarer Sensor zur Messung eines Wasserstands angeordnet ist.

In den in Figur 6 bzw. Figur 7 dargestellten Ausführungsbeispielen sind die Tragpfosten 220,320 an ihrem unteren Ende, an dem die Verbindung zur Basis 210,310 hergestellt wird, jeweils mit Halterungen 270,370, beispielsweise aus Metall, ausgestattet, über die die Befestigung an der jeweiligen Basis 210,310 realisiert wird, beispielsweise mit einer Verbindung zum Schutzplankenpfosten, zum Schutzplankenholm oder zu einer anderen Stelle der Schutzplanke bzw. zu einer geeigneten Stelle der Betongleitwand.

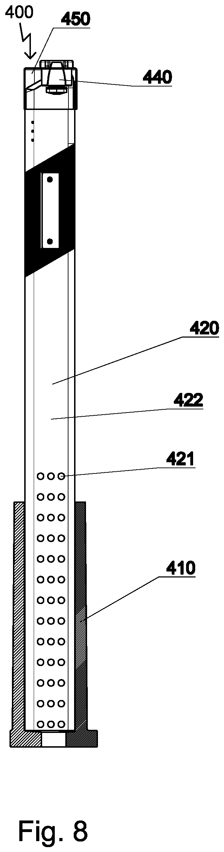

Figur 8 zeigt einen Längsschnitt durch viertes System 400 zur temporären Wasserstandüberwachung mit einer Basis 410, die unterhalb des Straßenniveaus liegt. In diese Basis 410 aufgenommen ist ein durch einen Leitpfosten gebildeter, hohler Tragpfosten 420, der nach unten offen ist und in seinem unteren Abschnitt einen Bereich aufweist, in dem Löcher 421 seine Wände durchsetzen. Der untere Abschnitt reicht dabei durch die Basis 410 hindurch, so dass seine Unterseite in Kontakt mit dem Erdreich kommt; in diesem Ausführungsbeispiel ragt er zudem aus der Basis 410 heraus, so dass auch in seinem unmittelbar oberhalb des Straßenniveaus liegenden Bereich Löcher 421 vorhanden sind. Durch die offene Unterseite und Löcher 421 kann also Grundwasser, aber auch auf der Straße stehendes Wasser in den Innenraum 422 innerhalb des Tragpfostens 420 eindringen und dessen Wasserstand dann gemessen werden.

An seinem der Basis 410 gegenüber liegenden oberen Ende weist der Tragpfosten 420 zudem eine Öffnung auf, in der ein Sensor 440 zur Messung eines Wasserstands angeordnet ist. Der Sensor 440 wird dabei durch ein Adaptergehäuse 450 gehalten, das kappenartig und reversibel lösbar auf den Tragpfosten 420 aufgesetzt ist und ist auf diese Weise direkt oder indirekt über das Adaptergehäuse 450 mit dem Tragpfosten 420 verbunden und in einem innerhalb des Tragpfostens 420 vorhandenen Innenraum 422 angeordnet. Bei diesem System 400 kann eine Kappe ohne Sensor 440 zur Messung eines Wasserstands den Tragpfosten 420 nach oben verschließen, wenn kein Bedarf zu einer Wasserstandmessung besteht; im Bedarfsfall kann dann an geeigneten Stellen einfach die Kappe durch ein kappenförmiges Adaptergehäuse 450 mit Sensor 440 zur Messung eines Wasserstands ersetzt werden; zum Rückbau nach Ende des temporären Bedarfs wird dann einfach diese Ersetzung rückgängig gemacht.

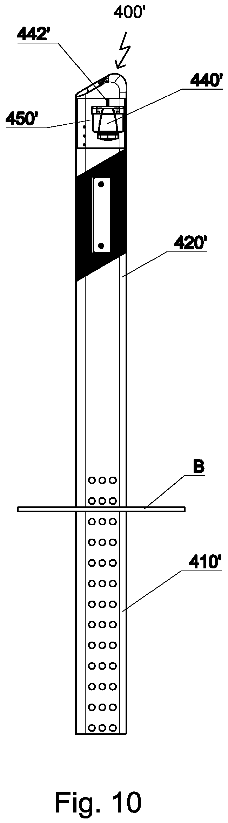

Figur 10 zeigt eine Variante der Ausführungsform gemäß Figur 8. Das System 400', das in Figur 10 dargestellt wird, unterscheidet sich vom System 400 einerseits dadurch, dass der Sensor 440' zur Messung eines Wasserstand über ein Adaptergehäuse 450', das beispielsweise durch Verschrauben von außen am als Leitpfosten ausgeführten Tragpfosten 420' befestigt sein kann, direkt im Innenraum 422' des Leitpfostens angeordnet ist, wobei der Sensor 440' zur Messung eines Wasserstands in dem in Figur 10 gezeigten Ausführungsbeispiel in dem Adaptergehäuse 450' mit einem Seil 442' aufgehängt ist, wie es exemplarisch in der Figur 9c gezeigt ist.

Ein weiterer beachtenswerter Unterschied zwischen dem System 400' und dem System 400 ist, dass in diesem Beispiel der Tragpfosten 420', wie durch die Bodenniveaulinie B veranschaulicht, mit seinem unteren, die Basis 410' bildenden Endabschnitt in den Erdboden eingegraben ist, so dass in diesem Ausführungsbeispiel die Basis 410' integral mit dem Tragpfosten 420'verbunden ist.

Anzumerken ist noch, dass mit einem zum System 400 zur temporären Wasserstandüberwachung weitgehend analog aufgebauten System auch eine Überwachung eines Wasserstands außerhalb des Tragpfostens möglich ist, indem der Sensor 440 schräg im kappenförmigen Adaptergehäuse 450 angeordnet ist. Dabei muss allerdings das Material des Tragpfostens 420 angepasst gewählt oder der Tragpfosten 420 mit einer geeigneten Öffnung versehen sein, um die Wasserstandmessung nicht beim Durchgang durch die Wand des Tragpfostens 420 zu verfälschen.

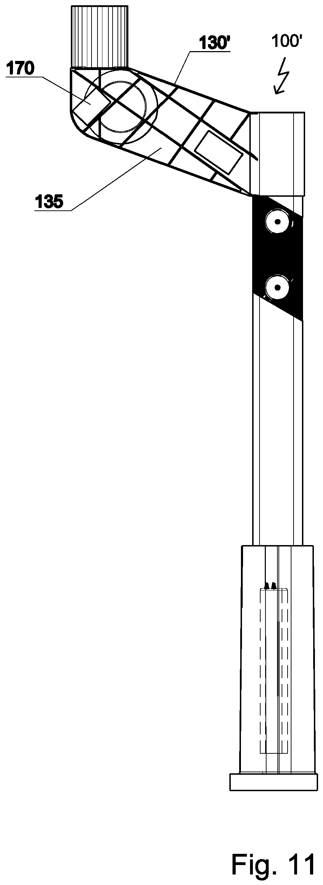

Das System 100', das in Figur 11 dargestellt ist, unterscheidet sich von dem in Figur 1 dargestellten System 100 dadurch, dass der teilweise geöffnet dargestellte Ausleger 130' eine Kameraanordnung 170 aufnimmt, die durch eine Öffnung in seiner Außenwand hindurch ermöglicht, Bilder vom aktuellen Wasserstand an dieser Stelle aufzunehmen und drahtlos zu übertragen. Darüber hinaus erkennt man in dieser teilweise geöffneten Darstellung, dass der Ausleger 130' durch ein System von in seinem Inneren angeordneten Verstärkungsrippen 135' verstärkt wird.

### Bezugszeichenliste

- 100,100',200,300,400,400': System
- 110,210,310,410,410': Basis
- 120,220,320,420,420': Tragpfosten
- 130,130',230,330: Ausleger
- 131: Aufnahme
- 132: Endabschnitt
- 133,233,333: Adapterstück
- 134,422,422': Innenraum
- 135': Verstärkungsrippen
- 140,140',240,340,440,440': Sensor
- 141: Halterung
- 142,442': Seil
- 143,144: Befestigungsmittel
- 150,150',250,350,450: Adaptergehäuse
- 151': kardanische Aufhängung
- 152: Deckel
- 153: Boden
- 153a: Ausnehmung
- 154: Wandfläche
- 154a: Öffnung
- 155a,155b: Griff
- 160: Stromversorgung
- 170: Kameraanordnung
- 260: Schutzplankenpfosten
- 270,370: Halterung
- 421: Loch
- B: Bodenlinie

## Patentansprüche

1. System (100,100',200,300,400,400') zur temporären Wasserstandüberwachung, wobei das System (100,100',200,300,400, 400') zur temporären Wasserstandsüberwachung eine am Straßenrand angeordnete Basis (110,210,310,410,410'), einen integral, direkt oder indirekt mit der Basis (110,210,310, 410,410') verbundenen Tragpfosten (120,220,320,420,420') und einen Sensor (140,140',240,340, 440) zur Messung eines Wasserstands aufweist, der direkt oder indirekt mit dem Tragpfosten (120,220,320,420,420') verbunden und in einem innerhalb des Tragpfostens (120,220,320,420,420') oder im Inneren eines am Tragpfosten (120,220,320,420,420') angeordneten Auslegers (130,130',230,330) vorhandenen Innenraums (134,422,422') angeordnet ist, wobei mindestens eine der Verbindungen zwischen Straßenrand und Basis (110,210, 310,410,410'), Basis (110,210,310,410,410') und Tragpfosten (120,220,320,420,420') sowie Tragpfosten (120,220,320, 420,420') und Sensor (140,140',240,340,440,440') zur Messung eines Wasserstands reversibel lösbar ist.

2. System (100,100',200,300,400,400') nach Anspruch 1, **dadurch gekennzeichnet, dass** der Sensor (140,140',240,340,440,440') zur Messung eines Wasserstands in einem Adaptergehäuse (150,150',250,350,450) angeordnet ist, dessen Außenkontur an die Form des Innenraums (134,422,422') so angepasst ist, dass der Sensor (140,140',240,340,440,440') in einer definierten Position gehalten wird.

3. System (100,100',200,300,400,400') nach Anspruch 1 oder 2, **dadurch gekennzeichnet, dass** der Sensor (140,140',240,340,440,440') zur Messung eines Wasserstands in einer kardanischen Aufhängung (151') gelagert ist oder an einem Seil (142,142') aufgehängt ist.

4. System (100,100',200,300,400,400') nach einem der Ansprüche 1 bis 3,
**dadurch gekennzeichnet, dass** der Sensor (140,140',240,340,440,440') zur Messung eines Wasserstands mit einem Mittel zur Diebstahlsicherung gesichert ist.

5. System (100,100',200,300,400,400') nach einem der Ansprüche 1 bis 4,
**dadurch gekennzeichnet, dass** die Basis (110,210,310,410,410') durch die bodenseitige Verankerung für einen Leitpfostens, durch die bodenseitige Verankerung eines Verkehrszeichens, durch ein permanentes Fahrzeugrückhaltesystem oder durch ein temporäres Fahrzeugrückhaltesystem gebildet wird.

6. System (100,100'200,300,400,400') nach einem der Ansprüche 1 bis 5,
**dadurch gekennzeichnet, dass** die Basis (110,210,310,410,410') und/oder der Tragpfosten (120,220,320,420) zumindest abschnittsweise wasserdurchlässig sind und dass der Innenraum (422,422'), in dessen Inneren der Sensor (140,140',240,340,440,440') zur Messung eines Wasserstands angeordnet ist, sich innerhalb des Tragpfostens (120,220,320,420) befindet.

7. System (100,100',200,300,400,400') nach einem der Ansprüche 1 bis 5
**dadurch gekennzeichnet, dass** der Innenraum (134), in dessen Inneren der Sensor (140,140',240, 340,440,440') zur Messung eines Wasserstands angeordnet ist, im Inneren des am Tragpfosten (120,220,320,420) angeordneten Auslegers (130,130'230,330) in dessen vom Tragpfosten (120,220,320,420) weg weisenden Endabschnitt (132) liegt.

8. System (100,100',200,300,400,400') nach Anspruch 7,
**dadurch gekennzeichnet, dass** der Ausleger (130,130',230,330) auf den Tragpfosten (120,220,320, 420) aufsteckbar ist, wobei über die Aufnahme (131), mit der der Ausleger (130,130',230,330) auf den Tragpfosten (120,220,320,420) aufgesteckt ist, ein Formschluss mit dem Tragpfosten (120,220,320,420) hergestellt wird, so dass der Ausleger (130,130',230,330) verdrehsicher auf den Tragpfosten (120,220,320,420) aufgesteckt ist.

9. System (100,100',200,300,400,400') nach Anspruch 7 oder 8, **dadurch gekennzeichnet, dass** der Ausleger (130,130',230,330) ein Adapterstück (133,233,333) zur Verbindung mit einem Verkehrsschild aufweist.

10. System (100,100',200,300,400,400') nach Anspruch 9,
**dadurch gekennzeichnet, dass** der Innenraum (134), in dessen Inneren der Sensor (140,140', 240,340,440,440') zur Messung eines Wasserstands angeordnet ist, im Inneren des Adapterstücks (130,130',230,330) liegt.

11. System (100,100',200,300,400,400')nach einem der Ansprüche 1 bis 10,
**dadurch gekennzeichnet, dass** der Tragpfosten (120,220,320,420) ein Leitpfosten ist.

12. System (100,100',200,300,400,400') nach einem der Ansprüche 1 bis 11,
**dadurch gekennzeichnet, dass** im Inneren der Basis (110,210,310,410,410') oder im Inneren des Tragpfostens (120,220,320,420) eine Stromversorgung (160) für den Sensor (140,140',240,340,440,440') zur Messung eines Wasserstands angeordnet ist.

13. System (100,100',200,300,400,400') nach einem der Ansprüche 1 bis 12,
**dadurch gekennzeichnet, dass** das System (100,100',200,300,400,400') eine Kameraanordnung (100) zur Übermittlung von Bildern des aktuellen Wasserstands aufweist.

14. System (100,100',200,300,400,400') nach einem der Ansprüche 2 bis 12,
**dadurch gekennzeichnet, dass** das Adaptergehäuse (150,150',250,350,450) eine Bodenfläche mit einer U-förmigen Ausnehmung und eine Wandfläche mit einer Öffnung aufweist, so dass der Sensor (140,140',240,340, 440,440') zur Messung eines Wasserstands von der Seite her in das Adaptergehäuse (150,150',250,350,450) eingeschoben werden kann.
